## Europäisches Patentamt
## European Patent Office
## Office européen des brevets

(11) Veröffentlichungsnummer: **0 169 263**
**A1**

# (12) EUROPÄISCHE PATENTANMELDUNG

(21) Anmeldenummer: **84108847.9**

(22) Anmeldetag: **26.07.84**

(51) Int. Cl.⁴: **B 60 D 1/00**

(43) Veröffentlichungstag der Anmeldung:
**29.01.86 Patentblatt 86/5**

(84) Benannte Vertragsstaaten:
**AT BE CH DE FR GB IT LI NL SE**

(71) Anmelder: PEKA-Fahrzeugbau GmbH & Co. KG
Rheinstrasse 116
D-7500 Karlsruhe 21(DE)

(72) Erfinder: Dickmann, Thomas, Dr.-Ing.
Erich-Heckel-Strasse 63
D-7500 Karlsruhe 41(DE)

(74) Vertreter: Trappenberg, Hans
Wendtstrasse 1
D-7500 Karlsruhe 21(DE)

(54) Abnehmbare Kugelstange mit Halterung.

(57) Die Erfindung betrifft eine abnehmbare Kugelstange mit Halterung, insbesondere für PKW, bestehend aus einer am Fahrzeugheck angebrachten Hülse, in die die Kugelstange mit ihrem Schaft einschiebbar und in der eingeschobenen Stellung mittels eines die Kugelstange an einen Anschlag führenden, längsverschiebbaren Schiebers arretierbar ist.

Da erst durch das Einschieben des Schiebers in die Hülse die Kugelstange arretiert wird, muß Sorge dafür getragen werden, daß auch bei stark wechselnden Zug- und Druckwirkungen auf die Kugelstange der Schieber in dieser sichernden Stellung verbleibt. Außerdem wird gefordert, daß es beim Einschieben der Kugelstange in die Hülse keiner zusätzlichen Manipulationen bedarf, um den Schieber in seine sichernde Stellung zu führen.

Erreicht wird dies nach der Erfindung dadurch, daß die Federkraft auf eine den Kugelstangenschaft (2) durchquerende Exzenterwelle einwirkt, die bei ihrer Verdrehbewegung den Schieber (5) verschiebt, wobei an der Exzenterwelle (6) ein Handhebel (16) verschwenkbar angebracht ist, der beim Einschieben der Kugelstange (1) in die Hülse (4) durch eine Feder in die Fluchtlinie der Exzenterwelle (6) gestreckt wird.

EP 0 169 263 A1

./...

Fig. 1

24.07.84 n24
PU 0789


PEKA Fahrzeugbau GmbH & Co. KG
Rheinstr. 116, 7500 Karlsruhe 21


Abnehmbare Kugelstange mit Halterung

Die Erfindung betrifft eine abnehmbare Kugelstange mit
Halterung, insbesondere für PKW, bestehend aus einer an
Fahrzeugheck angebrachten Hülse, in die die Kugelstange mit
ihren Schaft einschiebbar und in der eingeschobenen Stellung mittels eines die Kugelstange an einen Anschlag führenden, längs verschiebbaren Schiebers arretierbar ist, wobei
der Schieber durch eine ihn in Richtung auf das Schaftende
drückende Federkraft längsverschiebbar und in der Endstellung verriegelbar am Kugelstangenschaft angebracht ist und
eine im Betriebszustand in die Hülse eingreifende und an
der einführungsseitigen Stirnkante der Hülse anschlagende
Verstärkung aufweist und endständig am Kugelstangenschaft
ein sich im Betriebszustand an die hintere Hülsenstirnseite
anliegender Nocken vorgesehen ist und die seitlich den
Kugelstangenschaft führende Hülse einführungsseitig die
Höhe des Schiebers zuzüglich der Stärke des Schaftes zuzüglich der Höhe des Nockens aufweist und sich auf der Schieberseite in einer Stufe endseitig verengt auf die Höhe des Schiebers zuzüglich der Schaftstärke.

Eine derartige Konstruktion ist bekannt aus der DE-OS 30 04 285. Nachteilig wird hier empfunden, daß zum Einführen des Schiebers und damit zum Sichern der Kugelstange in der Hülse eine manuelle Tätigkeit notwendig ist beziehungsweise daß beim Unterlassen dieser Verriegelung oder beim nur teilweise Einführen des Schiebers die Betriebssicherheit der Konstruktion nicht gewährleistet ist. Dem will eine weiter bekannte Konstruktion nach der DE-OS 33 27 051 begegnen, die das Einschieben des Schiebers, also des Sicherungsmittels, über Federkraft vorschlägt. Zum Spannen der diese Kraft bewirkenden Feder ist an einem, mit der Feder verbundenen Stellring ein Handhebel vorgesehen, der zum Lösen der Kugelstange aus der Hülse betätigt werden muß und hierbei die Feder in den Spannzustand bringt. Beim Einführen allerdings, wenn also die Feder den Schieber in die Sicherungsstellung verschieben soll, verdreht sich auch wiederum der Stellring und damit der Handhebel, wobei es, durch hindernde Gegenstände beispielsweise, durchaus dazu kommen kann, daß der Stellring mit dem Handhebel in der Verdrehbewegung behindert wird und damit auch wiederum der Schieber nicht in seine sichernde Endstellung gelangt.

Aufgabe der Erfindung ist es eine Konstruktion anzugeben, bei der beim Einführen des Kugelstangenschaftes in die Hülse automatisch der Sicherungsvorgang durch Verschieben des Schiebers in seine Endstellung vorgenommen wird, ohne daß hierzu weitere Manipulationen notwendig sind und ohne daß zu befürchten ist, daß dieser Sicherungsvorgang durch irgendwelche in den Bewegungsvorgang des Schiebers eingreifende Hindernisse beeinträchtigt wird. Hierbei soll die bewährte Konstruktion nach der DE-OS 30 04 285 (mit Zusatz DE-OS 30 13 408) beibehalten werden, da durch den sichernden Schieber nicht nur eine hohe Betriebssicherheit, sondern auch durch die Gesamtkonstruktion eine über die
gesamte Lebensdauer der Konstruktion gleichbleibende
Klapperfreiheit gewährleistet ist.

Nach der Erfindung wird diese Aufgabe dadurch gelöst, daß
die Federkraft auf eine den Kugelstangenschaft durchquerende Exzenterwelle einwirkt, deren Exzenter in einem
Durchbruch des Schiebers untergebracht ist und daß die
Exzenterwelle mittels eines Handhebels verdrehbar und in
den beiden Extremstellungen über Rastmittel arretierbar
ist.

Nicht mehr also wie bei der Konstruktion nach der
DE-OS 33 27 051 wirkt die Feder über einen Stellring und
eine in ihm angebrachte Kulisse auf den Schieber, sondern
über eine Exzenterwelle beziehungsweise einen Exzenter, der
mit hoher Kraft bei geringen Reibungsverlusten den Schieber
sicher in seine Endlage führt. Konnte hierdurch bedingt der
Handhebel schon sehr klein gehalten werden, so daß kaum
noch anzunehmen ist, daß er die Verdrehbewegung der
Exzenterwelle behindert, so kann einem weiteren Erfindungsvorschlag nach auch noch der Handhebel, in Richtung auf die
Kugelstange zu, verschwenkbar an der Exzenterwelle angebracht sein, wodurch er also, wird er freigegeben, Hindernissen ausweichen kann. Zudem kann am Handhebel eine ihn in
die Fluchtlinie mit der Exzenterwelle zurückführende Feder
angebracht sein, so daß der Handhebel, wird er freigegeben,
stets in dieser Fluchtlinie liegt, sich also nicht irgendwie beziehungsweise irgendwo verhaken kann. Außerdem ist
dann auch eine Verletzungsgefahr ausgeschlossen, da der
Handhebel in dieser Lage nicht mehr von der Exzenterwelle
absteht.

Zweckmässigerweise wird das die Exzenterwelle in der
Schließlage haltende Rastmittel im Wege der Handhebel-Verschwenkbewegung angeordnet und durch Anschlag auf den Handhebel ausgerastet. Dadurch ist die Konstruktion nicht nur
äußerst bedienungsfreundlich, sondern auch sehr betriebssicher, da erst bei bewußtem Erfassen und Verschwenken des
Handhebels das die sichernde Endstellung des Schiebers bewirkende Rastmittel ausgerastet wird.

Im gleichen Sinne wirkt auch, wenn das die Exzenterwelle in
der Spannlage der Feder haltende Rastmittel erst nach dem
Einführen des Kugelstangenschaftes in die Hülse ausgerastet
wird, da dann sofort, ohne weitere Manipulationen, der
Schieber durch die Federkraft in seine sichernde Endlage
verschoben und damit die Kugelstange fest in der Hülse
verankert wird. Hierzu kann dieses Rastmittel eine federbelastete, beim Einführen des Kugelstangenschaftes in die
Hülse an der Hülsen-Vorderkante anschlagende und dadurch
die Verrastung lösende Klinke sein.

Auf der Zeichnung ist schematisch ein Ausführungsbeispiel
der erfindungsgemäßen Konstruktion dargestellt, und zwar
zeigen:

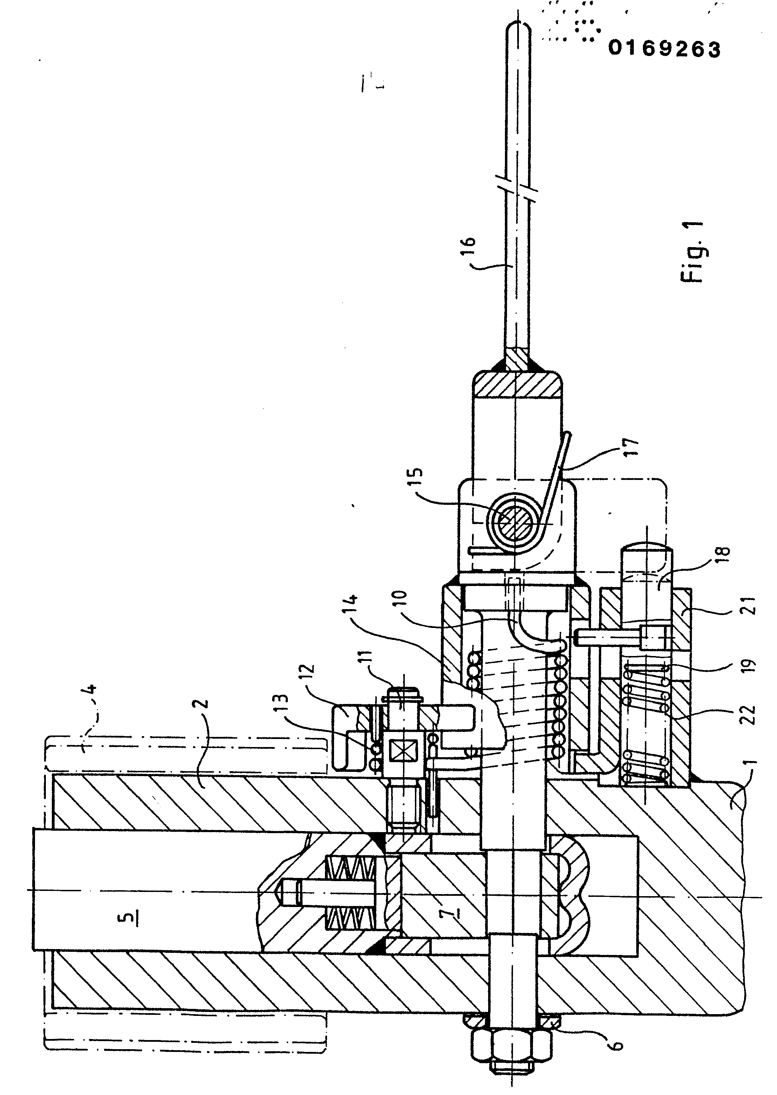

Fig. 1    Einen Schnitt nach der Schnittlinie II der
          Figur 2

Fig. 2    eine Seitenansicht, teilweise geschnitten

Fig. 3    eine Draufsicht und

Fig. 4    eine weitere Seitenansicht zur Erläuterung
          des Einführ-Vorganges.

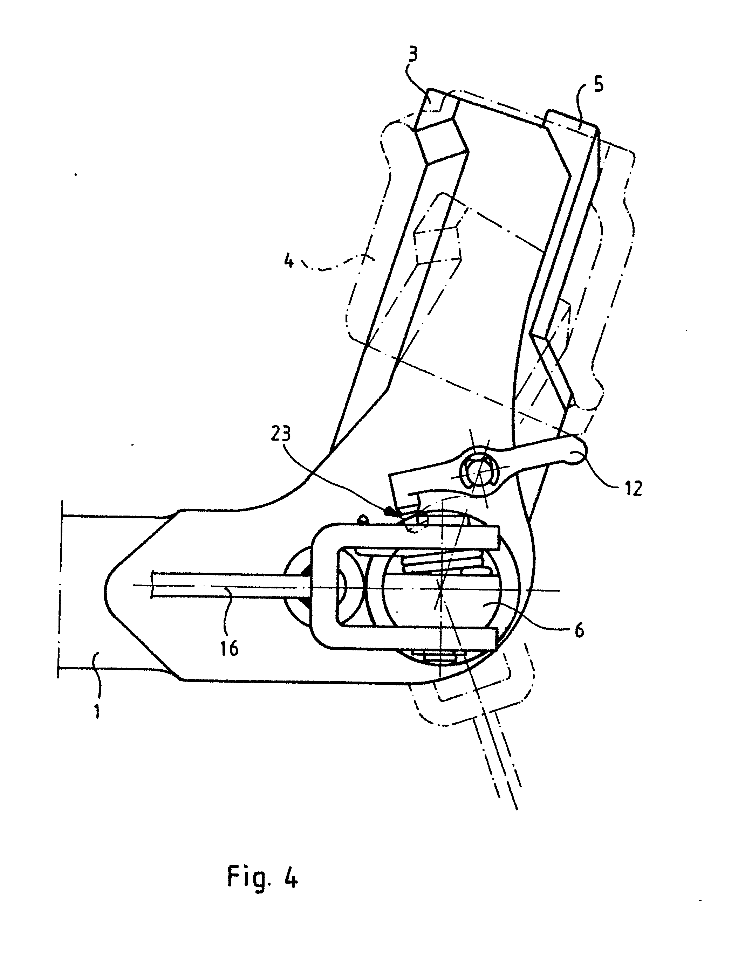

Eine Kugelstange 1 trägt am Ende ihres Kugelstangenschaftes 2 einen Nocken 3, der sich beim Einführen in eine am
Kraftfahrzeug angebrachte Hülse 4 (in Fig. 1 und Fig. 4 eingezeichnet) an eine dort vorgesehene Schräge anlegt. Gesichert wird der Kugelstangenschaft 2 in dieser, beispielsweise in den Fig. 1 und 4 gezeigten Lage, durch einen Schieber 5, der längs des Kugelstangenschaftes 2 verschiebbar angeordnet ist. Die Verschiebung dieses Schiebers 5 erfolgt durch eine Exzenterwelle 6, deren Exzenter 7 in einem Durchbruch des Schiebers 5 angeordnet ist. Zum Ausgleich von Toleranzen, wie auch zum sicheren Erreichen der Endlage des Schiebers 5, kann an der Oberseite des Durchbruchs 8 ein federbelasteter Gleitstein 9 vorgesehen sein.

An der Exzenterwelle 6 ist eine Schraubenfeder 10 angebracht, die sich an einem Achsstummel 11 abstützt. Auf dem Achsstummel 11 verschwenkbar angeordnet befindet sich eine Klinke 12, die durch eine Feder 13 auf eine mit der Exzenterwelle 6 verbundene Büchse 14 aufgedrückt wird. Verschwenkbar, über einen Bolzen 15 an der Exzenterwelle 6 angebracht ist ein Handhebel 16, wobei eine den Bolzen 15 umgreifende Feder 17 dafür sorgt, daß der freigegebene Handhebel 16 stets in der Fluchtlinie der Exzenterwelle 6 liegt. Am Kugelstangenschaft 3 angebracht ist außerdem noch ein Rastbolzen 18 mit einem Rastfinger 19, wobei dieser Rastfinger 19 in eine L-förmige Aussparung 20 der Büchse 14 eingreift.

In den Fig. 1 und 4 ist die Kugelstange 1 mit ihrem Kugelstangenschaft 3 in die Hülse 4 eingeführt und mittels Vorschieben des Schiebers 5 in dieser Lage gesichert, gezeigt. Durch die Spannkraft der Feder 10 wurde die Exzenterwelle 6 so verdreht, daß der Exzenter 7 den Schieber 5 in die gezeigte Lage verschoben hat, wodurch der Nocken 3 an die Schräge an der Rückseite der Hülse 4 angepreßt wird. Diese Lage des Schiebers 5 wird, bedingt durch die entsprechende Winkellage der Exzenterwelle 6, dadurch beibehalten, daß der Sicherungsfinger 19 in die Längs-Aussparung der L-förmigen Aussparung 20 eingreift und damit ein Verdrehen der Büchse 14 beziehungsweise der Exzenterwelle 16 verhindert.

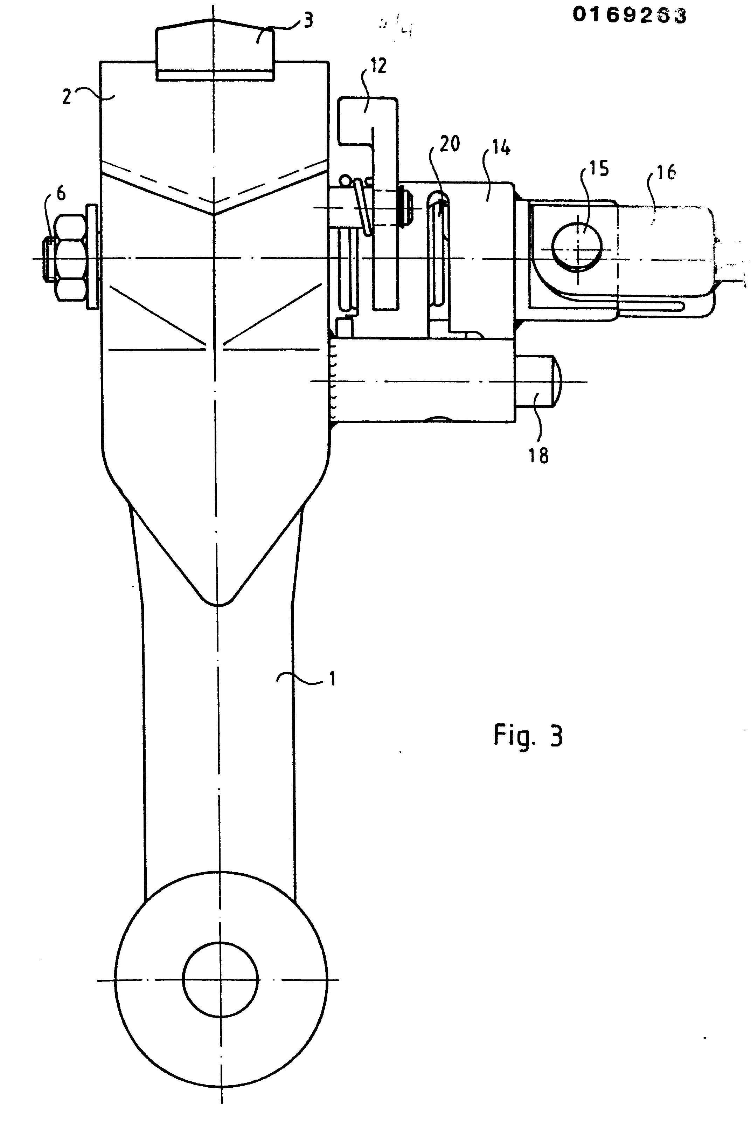

Der Handhebel 16 befindet sich, bedingt durch die Wirkung der Feder 17, in der in den Fig. 1 und 3 dargestellten gestreckten, in der Fluchtlinie der Exzenterwelle 6 liegenden Lage.

Die Klinke 12 liegt auf der Büchse 14 auf.

Durch Verschwenken des Handhebels 16 in die in Fig. 4 gezeigte Lage (strichpunktiert in Fig. 1 eingezeichnet) wird der Sicherungsbolzen 18 in seine Führungsbüchse 21 gegen die Kraft der Feder 22 eingedrückt und nimmt hierbei den Sicherungsfinger 19 bis zum querverlaufenden Teil der L-förmigen Aussparung 20 mit. Dadurch ist es möglich, die Exzenterwelle 6 zu verschwenken und damit den Schieber 5 in seine untere Extremlage zu führen, die, wie strichpunktiert in Fig. 4 eingezeichnet, das Herausnehmen der Kugelstange 1 aus der Hülse 4 gestattet. Bei diesem Vorgang wird gleichzeitig die Schraubenfeder 10 gespannt, bis die Klinke 12 in einer Arretierung 23 der Büchse 14 einschnappt, so daß diese Spannlage bei herausgenommener Kugelstange 1 beibehalten wird.

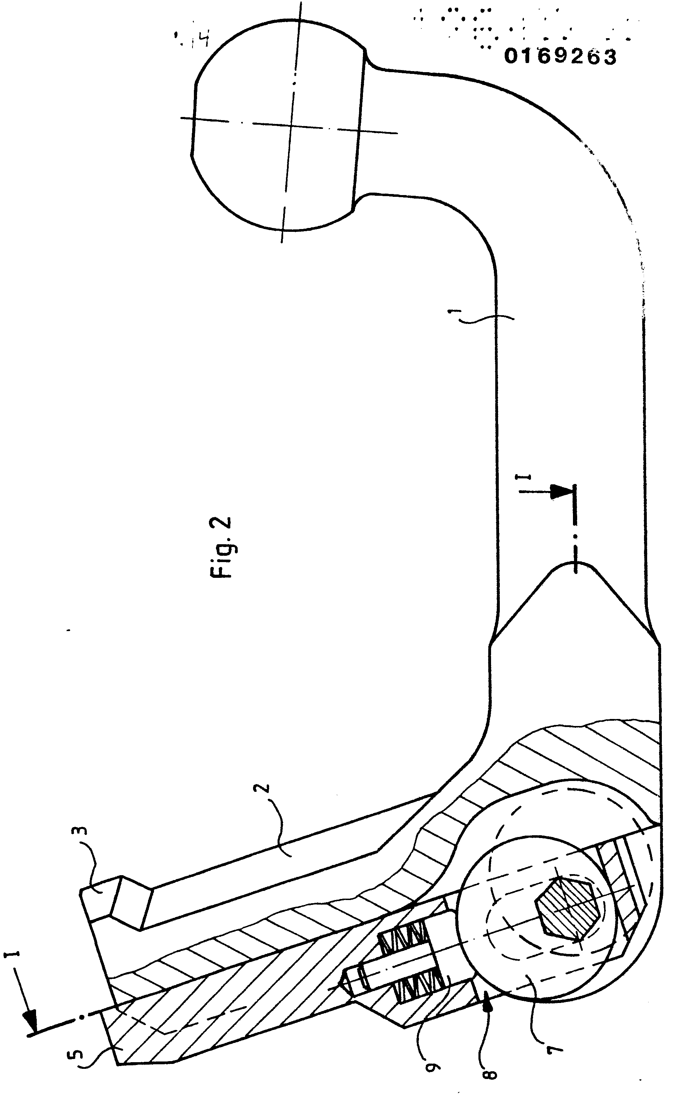

Beim Wieder-Einführen der Kugelstange 1 in die Hülse 4 schlägt die Klinke 12 kurz vor dem Ende der Einschubbewegung an die Vorderkante der Hülse 4 an, wodurch sie aus der Arretierungnut 23 heraustritt und damit die Büchse 14 beziehungsweise die Exzenterwelle 6 freigibt. Durch die Kraft der Feder 10 wird nunmehr die Exzenterwelle 6 und damit auch der Exzenter 7 so verdreht, daß der Schieber 5 in die in den Fig. 1, 2 und 4 gezeigte Endlage beziehungsweise Sicherungslage geschoben wird. Nach Freigabe des Handhebels 16 schwenkt dieser wieder, durch den Druck der Feder 17 in die in der Fluchtlinie der Exzenterwelle 6 liegende, in Fig. 1 gezeigte Lage zurück, gibt damit den Sicherungsbolzen 18 frei, so daß der Sicherungsfinger 19 wieder in die Längsaussparung der L-förmigen Aussparung 20 eingreifen, und damit diese Lage der Exzenterwelle 6
beziehungsweise des Schiebers 5 sichern kann. Zusätzlich
können selbstverständlich noch weitere Sicherungsmittel
vorgesehen werden, um damit diese Lage des Sicherungsbolzens 8 zu fixieren.

Hervorzuheben ist, daß beim Einschieben des Kugelstangenschaftes 3 in die Hülse 4 die, durch die Verschwenkbewegung
der Klinke 12 ausgelöste Verdrehbewegung der Exzenterwelle
6 beziehungsweise der Vorschubbewegung des Schiebers 5
nicht durch den Handhebel 16 behindert wird, da dieser sich
in diesem Moment in der in Fig. 1 gezeigten Lage befindet.

24.07.1984 n24

PU 0789

PEKA Fahrzeugbau GmbH & Co. KG

Rheinstr. 116, 7500 Karlsruhe 21

P A T E N T A N S P R Ü C H E

1.   Abnehmbare Kugelstange mit Halterung, insbesondere für
PKW, bestehend aus einer am Fahrzeugheck angebrachten
Hülse, in die die Kugelstange mit ihrem Schaft einschiebbar
und in der eingeschobenen Stellung mittels eines die Kugelstange an einen Anschlag führenden, längs verschiebbaren
Schiebers arretierbar ist, wobei der Schieber durch eine
ihn in Richtung auf das Schaftende drückende Federkraft
längsverschiebbar und in der Endstellung verriegelbar am
Kugelstangenschaft angebracht ist und eine im Betriebszustand in die Hülse eingreifende und an der einführungsseitigen Stirnkante der Hülse anschlagende Verstärkung aufweist und endständig am Kugelstangenschaft ein sich im Betriebszustand an die hintere Hülsenstirnseite anliegender
Nocken vorgesehen ist und die seitlich den Kugelstangenschaft führende Hülse einführungsseitig die Höhe des
Schiebers zuzüglich der Stärke des Schaftes zuzüglich der
Höhe des Nockens aufweist und sich auf der Schieberseite in
einer Stufe endseitig verengt auf die Höhe des Schiebers zuzüglich der Schaftstärke,

dadurch gekennzeichnet,

daß die Federkraft auf eine, den Kugelstangenschaft (2) durchquerende Exzenterwelle (6) einwirkt, deren Exzenter (7) in einem Durchbruch (8) des Schiebers (5) untergebracht ist und daß die Exzenterwelle (6) mittels eines Handhebels (16) verdrehbar und in den beiden Extremstellungen über Rastmittel (12, 19) arretierbar ist.

2. Vorrichtung nach Anspruch 1
dadurch gekennzeichnet,
daß der Hebel (16) in Richtung auf die Kugelstange (1) zu verschwenkbar an der Exzenterwelle (6) angebracht ist.

3. Vorrichtung nach Anspruch 2
dadurch gekennzeichnet,
daß an dem Hebel (16) eine ihn in die Fluchtlinie mit der Exzenterwelle (6) zurückführende Feder (17) angebracht ist.

4. Vorrichtung nach einem oder mehreren
der vorhergehenden Ansprüche,
dadurch gekennzeichnet,
daß das die Exzenterwelle (6) in der Schließlage haltende Rastmittel (18, 19) im Wege der Handhebel-Verschwenkbewegung angeordnet und durch Anschlag auf den Handhebel (16) ausrastbar ist.

5. Vorrichtung nach einem oder mehreren
der vorhergehenden Ansprüche,
dadurch gekennzeichnet,
daß das die Exzenterwelle (6) in der Spannlage haltende Rastmittel eine federbelastete, beim Einführen des Kugelstangenschaftes (2) in die Hülse (4) an der Hülsen-Vorderkante anschlagende und dadurch die Verrastung lösende Klinke (12) ist.

6. Vorrichtung nach einem oder mehreren
der vorhergehenden Ansprüche,
dadurch gekennzeichnet,
daß im Schieber (5) die obere Begrenzung des Durchbruchs (8) durchstoßend ein federbelasteter Gleitstein (9)
angeordnet ist.

Fig. 1

0169263

Fig. 2

0169263

Fig. 3

PU 078.9

0169263

Fig. 4

**0169263**

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKA... ANMELDUN... |
|---|---|---|---|
| A | GB-A-2 067 147 (ORIS) <br> * Insgesamt * | 1,2,6 | B 60 D ... |
| D,A | EP-A-0 037 572 (PEKA) <br> * Figuren * | 1 | |
| D,A | DE-A-3 004 285 (PEKA) <br> * Figuren * | 1 | |
| A | US-A-3 503 628 (LOWRY) | | |
| A | FR-A-2 163 169 (PEKA) | | |
| A | US-A-2 877 025 (MANTECA) | | |
| A | DE-A-2 723 073 (ORIS) | | |

RECHERCHIERTE SACHGEBIETE (Int. Cl.4)

B 60 D

Der vorliegende Recherchenbericht wurde für alle Patentansprüche erstellt.

| Recherchenort | Abschlußdatum der Recherche | Prüfer |
|---|---|---|
| DEN HAAG | 25-03-1985 | DICKINSON D.J. |